# EUROPÄISCHE PATENTSCHRIFT

(11) **EP 2 050 564 B1**
(45) Veröffentlichungstag und Bekanntmachung des Hinweises auf die Patenterteilung: **21.12.2016**
(21) Anmeldenummer: 08158478.1
(22) Anmeldetag: 18.06.2008
(51) Int. Cl.: B32B 27/32, B32B 27/18, F16L 9/133, B32B 1/08, F16L 11/04, B32B 27/08

(54) **FORMSTÜCK AUS KUNSTSTOFF**
PLASTIC MOULDED ITEM
BAGUETTE À PROFILER EN PLASTIQUE

(30) Priorität: 03.07.2007 DE 102007030914
(43) Veröffentlichungstag der Anmeldung: 22.04.2009
(73) Patentinhaber: Bänninger Kunststoff-Produkte GmbH, 35447 Reiskirchen (DE)
(72) Erfinder: Stamm, Hans Ulrich, 35633 Lahnau-Waldgirmes (DE); Schmidt, Herbert, 35239 Steffenberg (DE)
(74) Vertreter: advotec.

(56) Entgegenhaltungen:
- EP-A- 1 145 844
- EP-A- 1 260 546

## Beschreibung

Die Erfindung betrifft ein Formstück aus Kunststoff, wie es zum Herstellen von Rohrleitungen eingesetzt werden kann.

Derartige Formstücke können in der Art eines extrudierten, spritzgegossenen oder blasgeformten Rohrs, Fittings oder sonstigen Formstücks ausgebildet sein und dienen zum Erstellen von Rohrleitungen für flüssige, pastöse oder gasförmige Medien. Der Einsatz von Rohren aus Metall, insbesondere aus Kupfer, verzinkten Stahl oder Edelstahl wird durch bestimmte Randbedingungen, wie beispielsweise dem pH-Wert des aufgenommenen Mediums, der Strömungsgeschwindigkeit und der Betriebstemperatur beschränkt. Aus diesem Grund werden vielfach Kunststoffrohre in verschiedenen Einsatzgebieten, der Trinkwasserversorgung, der Heizungstechnik, der Lebensmittelindustrie, dem Apparatebau sowie der Chemischen Industrie verwendet. Insbesondere sind derartige Formstücke bekannt, die einen im Querschnitt mehrschichtigen Aufbau aufweisen. Durch die verschiedenen Schichten können die Formstücke in ihren Eigenschaften auf das jeweilige Anforderungsprofil abgestimmt werden.

Ein gattungsgemäßes Kunststoffrohr ist beispielsweise aus der DE 100 18 324 C2 bekannt. Bei diesem Kunststoffrohr ist eine Innenschicht vorgesehen, die mit speziellen Additiven zum Schutz der Polymerketten des Kunststoffes ausgerüstet ist. Durch die Additive werden die Polymerketten vor dem Einfluss aggressiver Medien geschützt. In einer als Barriereschicht dienenden Zwischenschicht sind bei diesem Rohr Glasfasern, Glaskugeln oder Glasmehl als Füllstoffe eingearbeitet, um die Immigration der Additive aus der Innenschicht hieraus zu verringern bzw. ganz zu vermeiden.

Dieses aus der DE 100 18 324 C2 bekannte Kunststoffrohr wird aus Polypropylen-Random-Kopolymerisat hergestellt. Dieses Material hat dabei den Nachteil, dass es nur eine relativ geringe mechanische Stabilität aufweist, so dass die Wandstärken der Formstücke relativ groß sein müssen. Entsprechend ist die Herstellung relativ teuer.

Aus der EP 1 260 546 A1 ist eine mehrschichtige Rohrleitung bekannt, die aus einem isotaktischen Polypropylenmaterial gebildet ist. Eine innere und äußere Schicht der Rohrleitung kann ein β-nukleiertes Polypropylenmaterial umfassen, wobei eine mittlere Schicht aus einem recycelten Polypropylenmaterial gebildet ist. Die Rohrleitung kann auch ohne die innere Schicht ausgebildet sein. Das β-nukleierte Polypropylenmaterial soll eine Steifigkeit und Schlagfestigkeit der Rohrleitung bei niedrigen Temperaturen verbessern.

Aufgabe der vorliegenden Erfindung ist es, ein neues Formstück aus Kunststoff zum Herstellen von Rohrleitungen vorzuschlagen, welches gegenüber dem Stand der Technik verbesserte mechanische Eigenschaften bei hohen Temperaturen aufweist.

Diese Aufgabe wird durch ein Formstück nach der Lehre des Anspruchs 1 gelöst.

Vorteilhafte Ausführungsformen der Erfindung sind Gegenstand der Unteransprüche.

Ausgangspunkt der Erfindung waren Versuche zur Substituierung des bisher verwendeten Herstellungsmaterials aus Polypropylen-Randon-Kopolymerisat. Bei diesen Versuchen hat sich herausgestellt, dass bei Verwendung von PP-R-CT-Polypropylenmaterial (PP: Polypropylen, R: Random, C: Kristallin, T: Temperaturbeständigkeit) die Wandstärke der Formstücke bei gleicher Stabilität erheblich verringert werden kann. Erfindungsgemäß sind die Formstücke deshalb aus PP-R-CT- Polypropylenmaterial hergestellt. Dieses Material bildet ein sehr feines Gefüge und weist damit entsprechend höhere mechanische Festigkeiten auf.

Der konstruktive Aufbau des Formstücks ist grundsätzlich beliebig. Nach einer bevorzugten Ausführungsform der Erfindung weist das Formstück einen mehrschichtigen Aufbau mit zumindest einer Innenschicht und zumindest einer Barriereschicht auf. Die Innenschicht kommt dabei mit dem in der Rohrleitung gefüllten Medium in Kontakt und enthält Additive zum Schutz der Polymerketten gegen aggressive Medien. Die Barriereschicht umfasst die Innenschicht allseitig und vermindert die Immigration der Additive aus der Innenschicht. Innenschicht und/oder Barriereschicht sind dabei bevorzugt aus PP-R-CT-Polypropylenmaterial hergestellt.

Um eine hohe mechanische Festigkeit zu erreichen, sollte das PP-R-CT-Polypropylenmaterial bevorzugt eine zumindest teilweise hexagonale Kristallstruktur (β-formkristallisiertes Polypropylen) aufweisen. Um die Immigration der Additive aus der Innenschicht zu vermindern, sollte das PP-R-CT-Polypropylenmaterial, insbesondere in der Barriereschicht, Füllstoffe enthalten. Als Füllstoffe können insbesondere Glasfasern, Glaskugeln und/oder Glasmehl eingesetzt werden.

In der einfachsten Ausführungsform mit Innenschicht und Barriereschicht weist das Formstück einen hier-lediglich zweischichtigen Aufbau auf, so dass die Barriereschicht zugleich die Außenschicht des Formstücks bildet.

Alternativ dazu kann das Formstück auch einen dreischichtigen Aufbau aufweisen, so dass die Barriereschicht dann von einer zusätzlichen Außenschicht allseitig umfasst ist.

Um den Herstellungsprozess zu vereinfachen und unerwünschte Wechselwirkungen zu vermeiden, sollte die Außenschicht bevorzugt aus dem gleichen Polymer, bevorzugt nämlich aus PP-R-GT- Polypropylenmaterial, wie die Barriereschicht hergestellt sein.

Zusätzlich kann auch noch eine zweite Barriereschicht im Formstück vorgesehen werden, um die Immigration der Additive aus der Innenschicht weiter zu reduzieren.

In der Innenschicht selbst können Metalldesaktivatoren, Chlorakzeptoren, Säureakzeptoren, Radikalfänger, UV-Stabilisatoren, Verarbeitungsstabilisatoren und/oder Langzeitstabilisatoren als Additive enthalten sein.

## Patentansprüche

1. Formstück aus Kunststoff zum Herstellen von Rohrleitungen mit einem im Querschnitt mehrschichtigen Aufbau, wobei das Formstück einen dreischichtigen Aufbau aufweist, wobei das Formstück zumindest eine Innenschicht und zumindest eine Barriereschicht aufweist, wobei die Barriereschicht von einer Außenschicht allseitig umfasst ist, wobei das Formstück aus Polypropylen-Random-Crystalline-Temperaturbeständigen Material (PP-R-CT) hergestellt ist, und wobei das PP-R-CT-Polypzopylenmaterial eine Kristallstruktur mit in β-Form kristallisierten Polypropylen aufweist,
**dadurch gekennzeichnet,**
**dass** wobei die Außenschicht und die Barriereschicht aus PP-R-CT-Polypropylenmaterial hergestellt ist, wobei das Formstück neben der ersten Barriereschicht aus einem kristallinem und/oder nukleiertem Polymer zumindest eine zweite Barriereschicht aufweist.

2. Formstück nach Anspruch 1,
**dadurch gekennzeichnet,**
**dass** die Innenschicht mit einem in der Rohrleitung geführten Medium in Kontakt kommt und Additive zum Schutz der Polymerketten gegen aggressive Medien enthält, und wobei die Barriereschicht die Innenschicht allseitig umfasst und die Migration der Additive aus der Innenschicht vermindert, und wobei die Innenschicht aus Polypropylen-Random-Crystalline-Temperaturbeständigen Material (PP-R-CT) hergestellt ist.

3. Formstück nach Anspruch 1 oder 2,
**dadurch gekennzeichnet,**
**dass** das PP-R-CT-Polypropylenmaterial, insbesondere die Barriereschicht Füllstoffe, insbesondere Glasfasern, Glaskugeln und/oder Glasmehl, und/oder Additive enthält.

4. Formstück nach einem der Ansprüche 1 bis 3,
**dadurch gekennzeichnet,**
**dass** die Innenschicht Metalldesaktivatoren und/oder Chlorakzeptoren und/oder Säureakzeptoren und/oder Radikalfänger und/oder UV-Stabilisatoren und/oder Verarbeitungsstabilisatoren und/oder Langzeitstabilisatoren als Additive enthält.

## Claims

1. A fitting made of plastic for producing pipelines having a multilayered design in its cross section, wherein the fitting comprises a three-layered design, wherein the fitting comprises at least one inner layer and at least one barrier layer, wherein the barrier layer is surrounded by an outer layer on all sides, wherein the fitting is produced from polypropylene random crystalline temperature resistant material (PP-R-CT), and wherein the PP-R-CT polypropylene material comprises a crystal structure having polypropylene crystallized in β-form,
**characterized in that**
the outer layer and the barrier layer are produced from PP-R-CT polypropylene material, wherein the fitting comprises at least one second barrier layer beside the first barrier layer made of a crystalline and/or nucleated polymer.

2. The fitting according to claim 1,
**characterized in that**
the inner layer comes into contact with a medium guided within the pipeline and contains additives for protecting the polymer chains against aggressive media, and wherein the barrier layer surrounds the inner layer on all sides and reduces the migration of the additives from the inner layer, and wherein the inner layer is produced from polypropylene random crystalline temperature resistant material (PP-R-CT).

3. The fitting according to claim 1 or 2,
**characterized in that**
the PP-R-CT polypropylene material, in particular the barrier layer, contains filling materials, in particular glass fibers, glass beads and/or glass powder, and/or additives.

4. The fitting according to any one of the claims 1 to 3,
**characterized in that**
the inner layer contains metal deactivators and/or chlorine acceptors and/or acid acceptors and/or radical scavengers and/or UV stabilizers and/or processing stabilizers and/or long-term stabilizers as additives.

## Revendications

1. Raccord en plastique pour produire des tuyauteries ayant une structure multicouche dans sa section transversale, dans lequel le raccord comprend une structure en trois couches, dans lequel le raccord comprend au moins une couche intérieure et au moins une couche de barrière, dans lequel la couche de barrière est entourée d'une couche extérieure de tous côtés, dans lequel le raccord est produit à partir d'un matériau polypropylène aléatoire cristallin résistant aux températures (PP-R-CT), et dans lequel le matériau polypropylène PP-R-CT comprend une structure cristalline ayant du polypropylène cristallisé en forme β,
**caractérisé en ce que**
la couche extérieure et la couche de barrière sont produites à partir du matériau polypropylène PP-R-CT, dans lequel le raccord comprend au moins une deuxième couche de barrière en plus de la première couche de barrière en polymère cristallin et/ou nucléé.

2. Raccord selon la revendication 1,
**caractérisé en ce que**
la couche intérieure entre en contact avec un médium conduit dans la tuyauterie et contient des additifs pour protéger les chaînes polymères contre des média agressifs, et dans lequel la couche de barrière entoure la couche intérieure de tous côtés et réduit la migration des additifs de la couche intérieure, et dans lequel la couche intérieure est produite à partir d'un matériau polypropylène aléatoire cristallin résistant aux températures (PP-R-CT).

3. Raccord selon la revendication 1 ou 2,
**caractérisé en ce que**
le matériau polypropylène PP-R-CT, en particulier la couche de barrière, contient des charges, en particulier des fibres de verre, des billes de verre et/ou de la poudre de verre, et/ou des additifs.

4. Raccord selon l'une quelconque des revendications 1 à 3,
**caractérisé en ce que**
la couche intérieure contient des désactivateurs de métaux et/ou des accepteurs de chlore et/ou des accepteurs d'acide et/ou des capteurs de radicaux et/ou des stabilisants UV et/ou des stabilisants de traitement et/ou des stabilisants de longue durée comme des additifs.
